# EUROPÄISCHE PATENTSCHRIFT

(11) **EP 4 230 992 B1**
(45) Veröffentlichungstag und Bekanntmachung des Hinweises auf die Patenterteilung: **09.10.2024**
(21) Anmeldenummer: 23153974.3
(22) Anmeldetag: 30.01.2023
(51) Int. Cl.: G01N 3/12

(54) **VERFAHREN ZUR DRUCKREGELUNG EINES AKTUATORS FÜR DIE PRÜFUNG VON PRÜFKÖRPERN**
METHOD FOR CONTROLLING THE PRESSURE OF AN ACTUATOR FOR TESTING TEST SAMPLES
PROCÉDÉ DE RÉGULATION DE PRESSION D'UN ACTIONNEUR POUR LE CONTRÔLE D'ÉCHANTILLONS

(30) Priorität: 22.02.2022 AT 501212022
(43) Veröffentlichungstag der Anmeldung: 23.08.2023
(73) Patentinhaber: Hainzl Industriesysteme GmbH, 4020 Linz (AT)
(72) Erfinder: Gradl, Christoph, 4230 Pregarten (AT)
(74) Vertreter: Hübscher & Partner Patentanwälte GmbH

(56) Entgegenhaltungen:
- EP-B1- 2 746 591
- DE-A1- 4 325 636

## Beschreibung

Die Erfindung bezieht sich auf ein Verfahren zur Druckregelung eines Aktuators für die Prüfung von Prüfkörpern, wobei mithilfe eines mit dem Aktuator verbundenen Regelglieds vorgegebene Druckverläufe eingeregelt werden, die wenigstens eine Druckaufbauphase und wenigstens eine Druckabbauphase umfassen, wobei in einer Druckaufbauphase zunächst, vorzugsweise über ein beispielsweise als Regelventil oder Verdrängersteuerung ausgebildetes Regelglied, ein Hauptzylinder zugeschaltet und der mit diesem verbundene Aktuator mechanisch bewegt wird, wonach bedarfsweise wenigstens ein Verstärkungszylinder zur Erhöhung des verfügbaren Kraftbereiches des Aktuators staffelweise zugeschaltet wird, und dass in einer Druckabbauphase der Hauptzylinder und der wenigstens eine bedarfsweise zugeschaltete Verstärkungszylinder wieder staffelweise abgeschaltet werden, und wobei in der Druckabbauphase zunächst der Hauptzylinder und danach staffelweise der wenigstens eine bedarfsweise zugeschaltete Verstärkungszylinder wieder abgeschaltet werden.

Impulsprüfstände dienen zur realitätsnahen Überprüfung der Dauerfestigkeit von druckbeaufschlagten Prüfkörpern, wie beispielsweise Schläuchen, Rohrverschraubungen oder Kompensatoren. Unter Impulsprüfständen sind insbesondere solche Prüfstände zu verstehen, die beispielsweise dynamische Druckprüfungen nach DIN EN ISO 6803, DIN EN ISO 19879 etc. ermöglichen. Die Prüfkörper werden bei den Prüfungen üblicherweise einem Impulsdruck von bis zu 2000 bar und Impulsfrequenzen von bis zu 2 Hz ausgesetzt. Dabei werden Impulsvolumina von bis zu 1000 cm³ pro Impuls erzeugt. Ausfälle der Prüfkörper bei den Prüfungen zeigen dabei potentielle Schwachstellen der Komponenten auf. Impulsprüfstände für hydraulische Schläuche sind beispielsweise auch aus der CN 106837934 A bekannt.

Um die für die Impulsprüfung erforderlichen hohen Drücke bereitzustellen, werden in der Regel hydraulisch angetriebene Druckübersetzer eingesetzt. Diverse Verfahren zur Druckregelung eines Aktuators mittels Durckverstärker bei Tandemanordnung der Hydraulikzylinder sind im Allgemeinen aus der DE 19822439 A1, der CA 2304407 A1 sowie der CN 112483511 A bekannt. Derartige Verfahren bei parallel angeordneten Hydraulikzylindern sind beispielsweise in der US 5058384 A und der EP 2573405 A2 beschrieben.

Um einen Prüfdruck auf Prüfkörper in mehreren Stufen aufzubringen, sind darüber hinaus beispielsweise aus der EP 2746591 A1, der DE 2203122 A1, sowie der DE 4325636 A1 entsprechende Vorrichtungen bekannt.

Der Druckübersetzer kann vorzugsweise mittels eines Servoventils geregelt werden, um die geforderten Druckverläufe präzise einzuregeln. Das Servoventil ermöglicht dabei eine exakte und hochdynamische Regelung. Nachteilig daran ist allerdings, dass die Drosselsteuerung des Servoventils jedoch zu einem sehr ungünstigen Wirkungsgrad führt. Obwohl bei der Impulsprüfung selbst keine Leistung umgesetzt wird, erfordert der Betrieb des Druckübersetzers eine erhebliche hydraulische Antriebsleistung. Diese Antriebsleistung muss nicht nur aufgebracht, sondern auch als Verlustwärme wieder abgeführt werden.

Der Erfindung liegt somit die Aufgabe zugrunde, ein Verfahren der eingangs geschilderten Art so auszugestalten, dass trotz einer präzisen Einregelung der Prüfdruckverläufe und folglich zuverlässigen Prüfbedingungen weniger hydraulische Antriebsleistung erforderlich ist sowie geringere Volumenströme umgesetzt werden müssen, sodass insgesamt ein höherer Wirkungsgrad des Verfahrens erzielt wird.

Die Erfindung löst die gestellte Aufgabe dadurch, dass die aus den jeweiligen Abschaltvorgängen des Hauptzylinders bzw. des wenigstens einen Verstärkungszylinders resultierenden, auf den Systemdruck bezogenen Drucküberhöhungen als hydraulische Energie in einem Hochdruckspeicher wenigstens teilweise zwischengespeichert und für die nächste Druckaufbauphase zur hydraulischen Druckbeaufschlagung des wenigstens einen Verstärkungszylinders und / oder des Hauptzylinders wieder bereitgestellt wird. Unter einem Zu- bzw. Abschalten des Hauptzylinders respektive des wenigstens einen Verstärkungszylinders wird im Sinne der Erfindung verstanden, dass in der jeweiligen Kolbenkammer des Hauptzylinders respektive des wenigstens einen Verstärkungszylinders der Druck erhöht bzw. reduziert wird. Unter einem gestaffelten Zu- und Abschalten ist zu verstehen, dass die zeitliche Reihenfolge des Zu- und Abschaltens des Hauptzylinders sowie des wenigstens einen Verstärkungszylinders je nach Bedarf grundsätzlich beliebig erfolgen kann. Beispielsweise kann vorgesehen sein, dass im Falle von mehreren Verstärkungszylindern diese entweder in einer bestimmten Reihenfolge einzeln nacheinander oder aber auch gruppenweise zu- bzw. abgeschaltet werden. Dadurch kann je nach Staffelung der Zu- und Abschaltvorgänge eine möglichst problemfreie Bewegung des Aktuators ermöglicht und etwaige, die Bewegung des Aktuators beeinträchtigende Kippmomente reduziert werden.

Die erfindungsgemäße Grundidee besteht darin, dass ein über den Hauptzylinder mechanisch bewegbarer Aktuator die Bewegung bzw. den Stellweg vorgibt und dadurch den gewünschten Druckverlauf im Prüfkörper erzeugt. Die nach Bedarf zugeschalteten Verstärkungszylinder erhöhen den Kraftbereich. Beim Druckaufbau können die einzelnen Zylinderflächen der Verstärkungszylinder somit je nach aktuellem Kraftbedarf nacheinander zugeschaltet werden. Vorzugsweise sind die jeweils inaktiven Verstärkungszylinder mit dem Tank des dem erfindungsgemäßen Verfahrens zugrundeliegenden Hydrauliksystems verbunden. Dadurch können die Drosselverluste beim Druckaufbau im Vergleich zu einer reinen Widerstandssteuerung, wie diese in der Regel über eine Servoventilsteuerung realisiert wird, deutlich vermindert werden. Je höher dabei die Anzahl der Verstärkungszylinder ist, desto höher ist der Wirkungsgrad des erfindungsgemäßen Verfahrens im Vergleich zu einer reinen Drosselsteuerung. Beim Druckabbau kann darüber hinaus der Wirkungsgrad weiter verbessert werden, indem in der Druckabbauphase durch gezieltes Abschalten der Verstärkungszylinder sich in den noch zugeschalteten Verstärkungszylindern der Druck über den Systemdruck erhöht. Wird darüber hinaus hydraulische Energie in die Systemdruckspeicher, insbesondere einen Hochdruckspeicher, rekuperiert, steht diese für den nächsten Druckaufbau zur Verfügung. Eine dem erfindungsgemäßen Verfahren zugrundeliegende Regelstufe, die neben dem Regelglied den Hauptzylinder und den wenigstens einen Verstärkungszylinder umfasst, kann grundsätzlich auf unterschiedliche Art und Weise, z.B. mithilfe einer verdrängerbasierten Lösung, eines elektrischen Linearmotors etc. realisiert werden. Wie zuvor schon erwähnt wurde, kann der Hauptzylinder mithilfe eines vorgeschalteten Servoventils, beispielsweise eines 4/3-Servoventils, geregelt werden. Die Verstärkungszylinder werden vorzugsweise jeweils mit gesonderten Wegeventilen, beispielsweise 3/2-Wegeventilen, angesteuert.

Besonders günstige Regel- und Prüfbedingungen ergeben sich, wenn eine vorzugsweise druckabhängige Einschalt- sowie Abschaltschwelle für den wenigstens einen Verstärkungszylinder vorgegeben wird. Dies kann in einer bevorzugten Ausführungsform durch ein Druckregelventil erfolgen, das anhand einer Druckrampe die jeweiligen Vorgabewerte bzw. die Einschalt- sowie Abschaltschwellen vorgibt. Dabei ist vorzugsweise ein gemeinsames Druckregelventil den jeweiligen, den entsprechenden Verstärkungszylindern zugeordneten Wegeventilen vorgeschaltet. Sind beispielsweise drei bedarfsweise zuschaltbare Verstärkungszylinder vorgesehen, so ergeben sich günstige Regelbedingungen, wenn das Druckregelventil einen Druckregelbereich von 0 bis 100 bar vorgibt, wobei vorzugsweise die Einschalt-bzw. Abschaltschwelle für den ersten Verstärkungszylinder im Druckregelbereich von 25 bis 34 bar, für den zweiten Verstärkungszylinder im Druckregelbereich von 58 bis 67 bar und für den dritten Verstärkungszylinder im Druckregelbereich von 91 bis 100 bar liegt.

Die Erfindung bezieht sich auch auf eine Vorrichtung zur Durchführung eines erfindungsgemäßen Verfahrens. Die Vorrichtung umfasst dabei einen mithilfe eines Regelglieds regelbaren Hauptzylinder und wenigstens einen bedarfsweise schaltbaren Verstärkungszylinder zur Erhöhung des verfügbaren Kraftbereiches eines Aktuators. Dabei ist ein Hochdruckspeicher zur Bereitstellung und zur rekuperativen Speicherung von hydraulischer Energie für den wenigstens einen Verstärkungszylinder vorgesehen. Zur Erhöhung des Wirkungsgrades des erfindungsgemäßen Verfahrens ist mit dem wenigstens einen Verstärkungszylinder einerseits und mit dem Hochdruckspeicher andererseits jeweils ein gemeinsames Rückschlagventil zur rekuperativen Speicherung von hydraulischer Energie im Hochdruckspeicher über eine Hochdruckleitung hydraulisch verbunden und/ oder mit dem wenigstens einen Verstärkungszylinder einerseits und mit einem Niederdruckspeicher andererseits jeweils ein gemeinsames Rückschlagventil zur Bereitstellung von hydraulischer Energie für einen Nachsaugvorgang über eine Niederdruckleitung hydraulisch verbunden. Zufolge dieser Merkmale können Drosselverluste beim Druckaufbau kompensiert und somit die Effizienz und damit einhergehend der Wirkungsgrad des erfindungsgemäßen Verfahrens beim Betrieb der Vorrichtung verbessert werden.

Für günstige Regelbedingungen kann, wie zuvor beschrieben, dem wenigstens einen Verstärkungszylinder ein Druckregelventil zur Vorgabe einer Druckrampe vorgeschaltet sein.

Simulationen haben gezeigt, dass bei der Durchführung eines erfindungsgemäßen Verfahrens bzw. beim Betrieb der erfindungsgemäßen Vorrichtung zur Impulsprüfung im gesamten Betriebsfrequenzbereich deutliche Einsparungen sowohl hinsichtlich der Antriebsleistung als auch hinsichtlich der Durchflussmenge erzielt werden konnten. Beispielsweise wurde mithilfe einer erfindungsgemäßen Vorrichtung, die drei zusätzliche Verstärkungszylinder umfasst, welche nacheinander bei vorgegebenen Einschalt- bzw. Abschaltschwellen im Druckregelbereich von 25 bis 34 bar, 58 bis 67 bar respektive 91 bis 100 bar in der Druckaufbauphase nacheinander zugeschaltet bzw. in der Druckabbauphase wieder nacheinander abgeschaltet wurden, ein erfindungsgemäßes Verfahren durchgeführt, wobei bei einem Prüfdruck von 500 bar eine Einsparung der erforderlichen Antriebsleistung von ca. 55 Prozent und bei einem Prüfdruck von 1300 bar eine diesbezügliche Einsparung von ca. 46 Prozent gegenüber einem aus dem Stand der Technik bekannten Impulsprüfverfahren erzielt wurde. Im Hinblick auf die Durchflussmengen konnten in diesem Zusammenhang bei einem Prüfdruck von 500 bar eine Einsparung von ca. 55 Prozent und bei einem Prüfdruck von 1300 bar eine Einsparung von ca. 46 Prozent erzielt werden. Unter dem Prüfdruck wird im Sinne der Erfindung der über den Aktuator wirkende und/oder an das zu prüfende Bauteil angelegte Druck verstanden. Im Gegensatz dazu bezieht sich der Systemdruck auf die Versorgungsseite, d.h. auf den über die hydraulischen Versorgungsleitungen wirkenden Druck.

In der Zeichnung ist der Erfindungsgegenstand beispielsweise dargestellt. Es zeigen
- Fig. 1: einen schematischen Hydraulikschaltplan einer erfindungsgemäßen Vorrichtung mit einem Hauptzylinder und drei Verstärkungszylindern bei der Durchführung eines erfindungsgemäßen Verfahrens in der Druckaufbauphase bei zugeschaltetem Hauptzylinder,
- Fig. 2: eine der Fig.1 entsprechende Darstellung bei zusätzlich zugeschaltetem ersten Verstärkungszylinder,
- Fig. 3: eine der Fig. 1 entsprechende Darstellung in der Druckabbauphase bei abgeschaltetem Hauptzylinder,
- Fig. 4: eine der Fig. 3 entsprechende Darstellung bei zusätzlich ausgeschaltetem dritten Verstärkungszylinder,
- Fig. 5: schematische Signalverläufe entsprechend dem in den Fig. 1 bis 4 durchgeführten erfindungsgemäßen Verfahren,
- Fig. 6: eine schematische Schnittdarstellung eines erfindungsgemäßen Druckübersetzers in einer Seitenansicht, der einen mit einem Hauptzylinder und mehreren Verstärkungszylindern antriebsverbundenen Aktuator umfasst und
- Fig. 7: einen Schnitt entlang der Linie VII-VII.

Zur Durchführung eines erfindungsgemäßen Verfahrens zur Impulsprüfung von nicht näher dargestellten Prüfkörpern, beispielsweise Schläuchen, wird eine erfindungsgemäße Vorrichtung vorgeschlagen, bei der ein Aktuator 1 für die Prüfkörper über einen Hauptzylinder 2 sowie bedarfsweise über mehrere Verstärkungszylinder 3, 4, 5 mechanisch bewegt wird. Die Vorrichtung weist dabei zur Einregelung eines vorgegebenen Druckverlaufes ein als 4/3-Servoventil ausgebildetes Regelglied 6 auf, das mit dem Hauptzylinder 2 und somit mit dem Aktuator 1 beispielsweise mechanisch verbunden ist. Den ebenfalls mit dem Aktuator 1 mechanisch verbundenen und somit antriebsverbundenen Verstärkungszylindern 3, 4, 5 sind zu deren Ansteuerung jeweils 3/2-Wegeventile 7, 8, 9 vorgeschaltet. Diesen Wegeventilen 7, 8, 9 ist wiederum ein gemeinsames Druckregelventil 10 vorgeschaltet, das die jeweiligen Vorgabewerte vorgibt. Im vorliegenden Ausführungsbeispiel ist die Einschalt-bzw. Abschaltschwelle für den ersten Verstärkungszylinder im Druckregelbereich von 25 bis 34 bar, für den zweiten Verstärkungszylinder im Druckregelbereich von 58 bis 67 bar und für den dritten Verstärkungszylinder im Druckregelbereich von 91 bis 100 bar vorgesehen.

Mit den Verstärkungszylindern 3, 4, 5 einerseits sowie mit einem Hochdruckspeicher 11 andererseits sind jeweils gemeinsame Rückschlagventile 12, 13, 14 zur rekuperativen Speicherung von hydraulischer Energie im Hochdruckspeicher 11 über eine Hochdruckleitung 15 hydraulisch verbunden. Darüber hinaus sind mit den Verstärkungszylindern 3, 4, 5 einerseits sowie mit einem Niederdruckspeicher 16 andererseits jeweils Rückschlagventile 17, 18, 19 zur Bereitstellung von hydraulischer Energie für einen Nachsaugvorgang über eine Niederdruckleitung 20 hydraulisch verbunden.

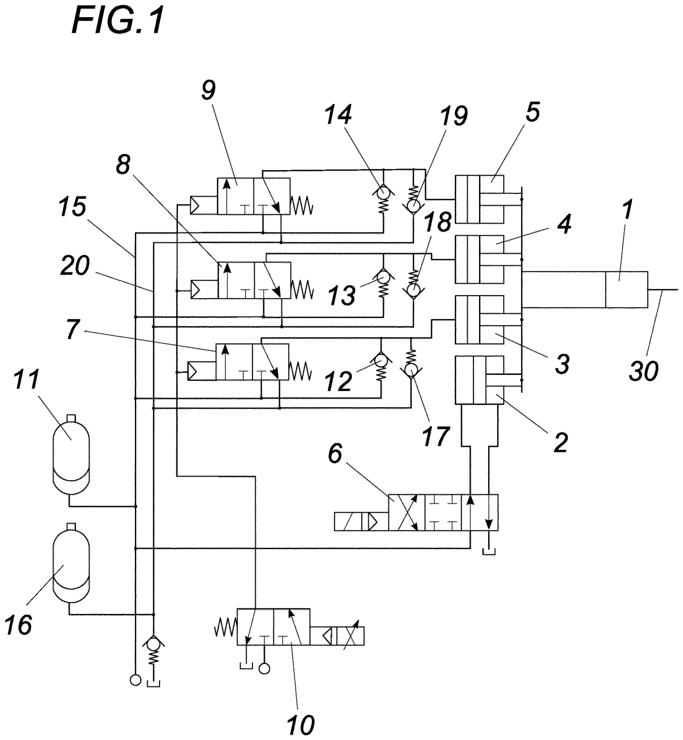

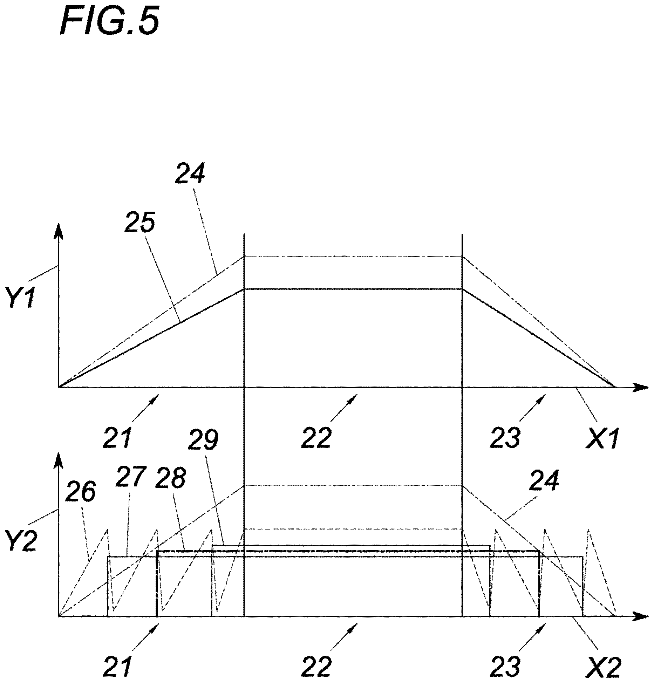

Im Folgenden wird anhand der schematischen Hydraulikschaltpläne gemäß Fig. 1 bis 4 gemeinsam mit den schematischen Signalverläufen gemäß Fig. 5 ein beispielhafter Druckverlauf bei der mechanischen Bewegung des Aktuators 1 beschrieben.

Der Druckverlauf umfasst eine Druckaufbauphase 21, eine Druckhaltephase 22 sowie eine Druckabbauphase 23. In der Druckaufbauphase 21 wird zunächst über das Regelglied 6 der Hauptzylinder 2 zugeschaltet und der mit diesem verbundene Aktuator 1 mechanisch bewegt, wie dies im schematischen Schaltplan gemäß Fig. 1 angedeutet wird. Durch die mechanische Bewegung des Aktuators 1 kommt es prinzipiell zu einem Druckaufbau in einem nicht näher dargestellten, dem Aktuator 1 zugeordneten abgeschlossenen Volumen, sodass der aufgebaute Druck als Prüfdruck an ein zu prüfendes Bauteil angelegt werden kann. Währenddessen bleiben die Verstärkungszylinder 3, 4, 5 inaktiv, d.h. sie sind noch nicht zugeschaltet. Dabei wird über die Rückschlagventile 17, 18, 19 ein Fluid aus dem Niederdruckspeicher 16 über die zugehörige Niederdruckleitung 20 nachgesaugt.

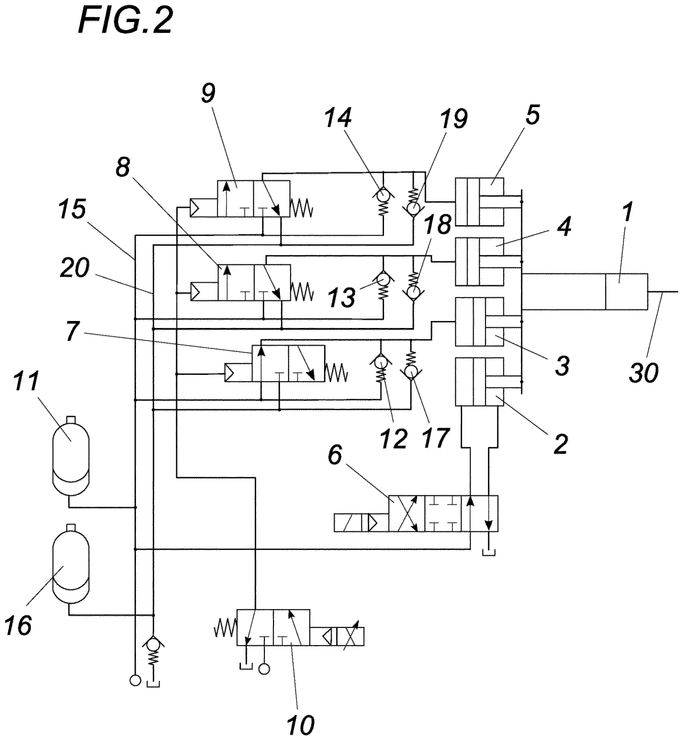

Wird der erste Druckregelbereich des Druckventiles 10 durchschritten, wird der erste Verstärkungszylinder 3 zusätzlich zugeschaltet, wie dies aus Fig. 2 ersichtlich ist. Über die den beiden übrigen Verstärkungszylindern 4, 5 zugeordneten Rückschlagventile 18, 19 wird weiterhin Fluid über die Niederdruckleitung 20 nachgesaugt, wohingegen kein Nachsaugen mehr über das dem ersten Verstärkungszylinder 3 zugeordnete Rückschlagventil 17 erfolgt. Die Zuschaltvorgänge für die übrigen Verstärkungszylinder 4, 5 während der weiteren Druckaufbauphase 21 erfolgen analog. Es folgt anschließend eine nicht näher dargestellte Druckhaltephase 22, bei der sowohl der Hauptzylinder 2 als auch die Verstärkungszylinder 3, 4, 5 zugeschaltet sind und auch kein Nachsaugen über die Rückschlagventile 17, 18, 19 erfolgt.

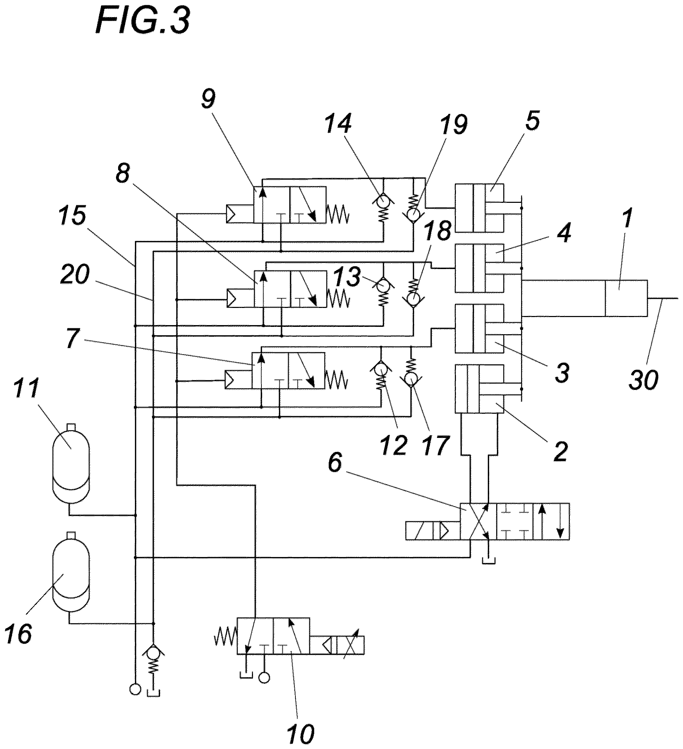

Wie dies anhand des schematischen Hydraulikschaltplanes gemäß Fig. 3 angedeutet wird, folgt auf die Druckhaltephase 22 die Druckabbauphase 23. Dabei wird zunächst der Hauptzylinder 2 über das ihm zugeordnete Regelventil 6 abgeschaltet, d.h. in der Kolbenkammer des Hauptzylinders 2 wird über das ihm zugeordnete Regelventil 6 der Druck reduziert. Diese Druckerhöhung wird als hydraulische Energie rekuperiert. Dazu wird Fluid über die Rückschlagventile 12, 13, 14 der noch zugeschalteten Verstärkungszylinder 3, 4, 5 im Hochdruckspeicher 11 zwischengespeichert und für die nächste, nicht näher dargestellte Druckaufbauphase eines weiteren Prüfvorganges zur hydraulischen Druckbeaufschlagung der Verstärkungszylinder 3, 4, 5 wieder bereitgestellt.

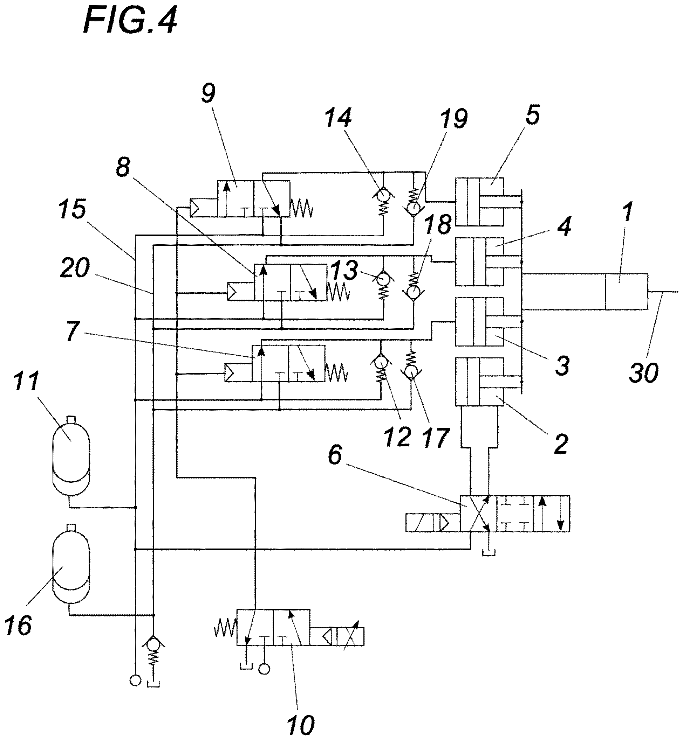

In weiterer Folge wird beim Durchschreiten des entsprechenden Druckregelbereiches des Druckventiles 10 der dritte Verstärkungszylinder 5, der während der Druckaufbauphase 21 als letzter zugeschaltet wurde, über das Wegeventil 9 abgeschaltet (Fig. 4), d.h. in der Kolbenkammer des dritten Verstärkungszylinders 5 wird über das ihm zugeordnete Wegeventil 9 der Druck reduziert. Über die beiden noch zugeschalteten Verstärkungszylinder 3, 4 und den zugehörigen Rückschlagventilen 12, 13 wird weiterhin hydraulische Energie in den Hochdruckspeicher 11 rekuperiert. Die Abschaltvorgänge für die übrigen Verstärkungszylinder 3, 4 während der weiteren Druckabbauphase 23 erfolgen analog.

Fig. 5 zeigt den dem Ausführungsbeispiel zugrundeliegenden Druckverlauf 24, den Stellwegverlauf 25 des Aktuators 1 sowie die dem Druckregelventil 10 bzw. den Wegeventilen 7, 8, 9 zugeordneten Signalverläufe 26 bzw. 27, 28, 29. Über die Abszissen X1, X2 wird dabei die Zeit angegeben. Die Ordinate Y1 bezieht sich auf den Druck in Bezug auf den Druckverlauf 24 bzw. auf den Stellweg des Aktuators in Bezug auf den Stellwegverlauf 25. Die Ordinate Y2 bezieht sich beispielsweise auf Kraftverläufe in Bezug auf die Signalverläufe 26, 27, 28, 29 bzw. auf den Druck in Bezug auf den Druckverlauf 24. Anhand von Fig. 5 soll nochmals das Durchlaufen der Druckaufbauphase 21, der Druckhaltephase 22 und der Druckabbauphase 23, sowie die durch das Druckregelventil 10 vorgegebene Druckrampe und die diesbezüglichen Einschalt- bzw. Abschaltvorgänge der jeweiligen, den Wegeventilen 7, 8, 9 zugeordneten Verstärkungszylinder 3, 4, 5 veranschaulichen. Wie dies insbesondere anhand der Signalverläufe 26, 27, 28, 29 des Druckregelventiles 10 und der Wegeventile 7, 8, 9 ersichtlich ist, werden bei Durchschreiten der entsprechenden Druckregelbereiche auf Basis des Druckverlaufes 24 die jeweiligen Verstärkungszylinder 3, 4, 5 in der Druckaufbauphase 21 nacheinander eingeschaltet bzw. in der Druckabbauphase 23 in umgekehrter Reihenfolge wieder nacheinander abgeschaltet.

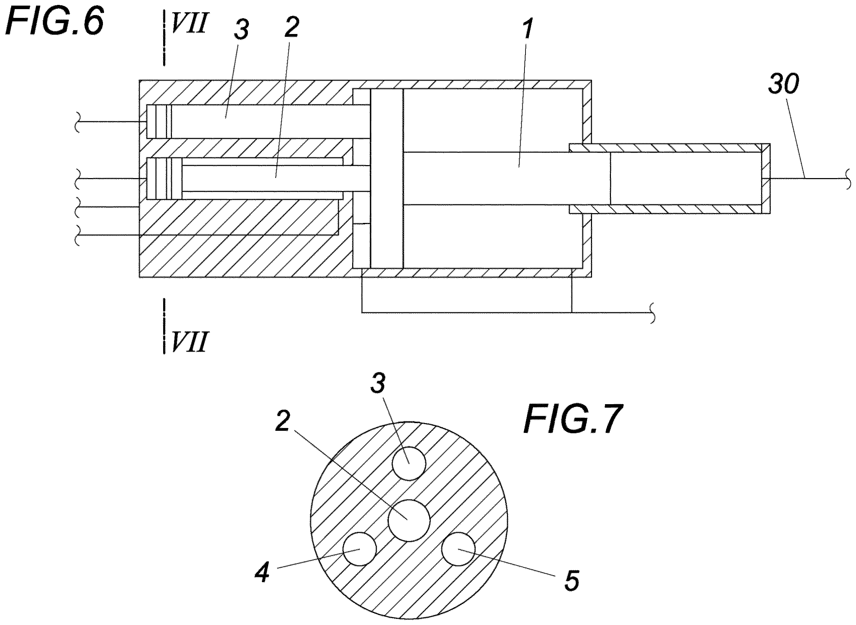

Fig. 6 und Fig. 7 zeigen Schnittansichten eines Druckübersetzers einer erfindungsgemäßen Vorrichtung gemäß dem vorliegenden Ausführungsbeispiel. Der Druckübersetzer umfasst einen mit dem Hauptzylinder 2 und den Verstärkungszylindern 3, 4, 5 antriebsverbundenen Aktuator 1. Der Aktuator 1 ist über eine angedeutete hydraulische Leitung 30 mit einem nicht näher dargestellten Prüfkörper zur Impulsprüfung hydraulisch verbunden. Grundsätzlich sind hinsichtlich der Anzahl sowie der Anordnung der Verstärkungszylinder 3, 4, 5 in Bezug auf den Hauptzylinder 2 je nach Einsatzzweck unterschiedliche Ausgestaltungsmöglichkeiten denkbar.

## Patentansprüche

1. Verfahren zur Druckregelung eines Aktuators (1) für die Prüfung von Prüfkörpern, wobei mithilfe eines mit dem Aktuator (1) verbundenen Regelglieds (6) vorgegebene Druckverläufe (24) eingeregelt werden, die wenigstens eine Druckaufbauphase (21) und wenigstens eine Druckabbauphase (23) umfassen, wobei in einer Druckaufbauphase (21) ein Hauptzylinder (2) zugeschaltet und der mit diesem verbundene Aktuator (1) mechanisch bewegt wird, wonach bedarfsweise wenigstens ein Verstärkungszylinder (3, 4, 5) zur Erhöhung des verfügbaren Kraftbereiches des Aktuators (1) staffelweise zugeschaltet wird, und dass in einer Druckabbauphase (23) der Hauptzylinder (2) und der wenigstens eine bedarfsweise zugeschaltete Verstärkungszylinder (3, 4, 5) wieder staffelweise abgeschaltet werden, und wobei in der Druckabbauphase (23) zunächst der Hauptzylinder (2) und danach staffelweise der wenigstens eine bedarfsweise zugeschaltete Verstärkungszylinder (3, 4, 5) wieder abgeschaltet werden, wobei die aus den jeweiligen Abschaltvorgängen des Hauptzylinders (2) und des wenigstens einen Verstärkungszylinders (3, 4, 5) resultierenden, auf den Systemdruck bezogenen Drucküberhöhungen als hydraulische Energie in einem Hochdruckspeicher (11) zwischengespeichert und für die nächste Druckaufbauphase zur hydraulischen Druckbeaufschlagung des wenigstens einen Verstärkungszylinders (3, 4, 5) und des Hauptzylinders (2) wieder bereitgestellt wird.

2. Verfahren nach Anspruch 1, **dadurch gekennzeichnet, dass** eine, vorzugsweise druckabhängige, Einschalt- sowie Abschaltschwelle für den wenigstens einen Verstärkungszylinder (3, 4, 5) vorgegeben wird.

3. Vorrichtung zur Durchführung eines Verfahrens nach einem der vorangegangenen Ansprüche, umfassend einen mithilfe eines Regelglieds (6) regelbaren Hauptzylinder (2) und wenigstens einen bedarfsweise schaltbaren Verstärkungszylinder (3, 4, 5) zur Erhöhung des verfügbaren Kraftbereiches eines Aktuators (1), **dadurch gekennzeichnet, dass** ein Hochdruckspeicher (11) zur Bereitstellung und zur rekuperativen Speicherung von hydraulischer Energie für den wenigstens einen Verstärkungszylinder (3, 4, 5) und den Hauptzylinder (2) vorgesehen ist, und dass mit dem wenigstens einen Verstärkungszylinder (3, 4, 5) einerseits und mit dem Hochdruckspeicher (11) andererseits jeweils ein gemeinsames Rückschlagventil (12, 13, 14) zur rekuperativen Speicherung von hydraulischer Energie im Hochdruckspeicher (11) über eine Hochdruckleitung (15) hydraulisch verbunden ist und dass mit dem wenigstens einen Verstärkungszylinder (3, 4, 5) einerseits und mit einem Niederdruckspeicher (16) andererseits jeweils ein gemeinsames Rückschlagventil (17, 18, 19) zur Bereitstellung von hydraulischer Energie für einen Nachsaugvorgang über eine Niederdruckleitung (20) hydraulisch verbunden ist.

4. Vorrichtung nach Anspruch 3, **dadurch gekennzeichnet, dass** dem wenigstens einen Verstärkungszylinder (3, 4, 5) ein Druckregelventil (10) zur Vorgabe einer Druckrampe vorgeschaltet ist.

## Claims

1. Method for controlling the pressure of an actuator (1) for testing specimens, wherein preset pressure curves (24), which comprise at least one pressure build-up phase (21) and at least one pressure reduction phase (23), are controlled with the aid of a control element (6) connected to the actuator (1), wherein a main cylinder (2) is activated in a pressure build-up phase (21) and the actuator (1) connected thereto is moved mechanically, after which, as required, at least one booster cylinder (3, 4, 5) is activated in a staggered manner in order to increase the available force range of the actuator (1), and in a pressure reduction phase (23) the main cylinder (2) and the at least one booster cylinder (3, 4, 5), which booster cylinder (3, 4, 5) is activated as required, are deactivated again in a staggered manner, and wherein in the pressure reduction phase (23) first the main cylinder (2) and then the at least one booster cylinder (3, 4, 5), which is activated as required, are deactivated again, wherein the pressure excesses, which result from the respective deactivation processes of the main cylinder (2) and of the at least one booster cylinder (3, 4, 5) and are related to the system pressure, are temporarily stored as hydraulic energy in a high-pressure reservoir (11) and made available again for the next pressure build-up phase for hydraulic pressurization of the at least one booster cylinder (3, 4, 5) and the main cylinder (2).

2. Method according to claim 1, **characterized in that** a, preferably pressure-dependent, activation and deactivation threshold for the at least one booster cylinder (3, 4, 5) is preset.

3. Device for carrying out a method according to one of the preceding claims, comprising a main cylinder (2) which can be controlled with the aid of a control element (6) and at least one booster cylinder (3, 4, 5) which can be activated as required in order to increase the available force range of an actuator (1), **characterized in that** a high-pressure reservoir (11) is provided for the provision and for the recuperative storage of hydraulic energy for the at least one booster cylinder (3, 4, 5) and the main cylinder (2), and **in that** a common non-return valve (12, 13, 14) for the recuperative storage of hydraulic energy in the high-pressure reservoir (11) is hydraulically connected via a high-pressure line (15) to the at least one booster cylinder (3, 4, 5) on the one hand and to the high-pressure reservoir (11) on the other hand, and **in that** a common non-return valve (17, 18, 19) for the provision of hydraulic energy for a suction process is hydraulically connected to the at least one booster cylinder (3, 4, 5) on the one hand and to a low-pressure reservoir (16) via a low-pressure line (20) on the other hand.

4. Device according to claim 3, **characterized in that** a pressure control valve (10) for presetting a pressure ramp is connected upstream of the at least one booster cylinder (3, 4, 5).

## Revendications

1. Procédé de réglage de pression d'un actionneur (1) pour le contrôle de spécimens d'essai, selon lequel des courbes de pression (24) prédéfinies qui comprennent au moins une phase d'élévation de pression (21) et au moins une phase de réduction de pression (23) sont réglées à l'aide d'un élément de réglage (6) relié à l'actionneur (1), selon lequel, dans une phase d'élévation de pression (21), un maître-cylindre (2) est activé et l'actionneur (1) relié à celui-ci est déplacé mécaniquement, après quoi si nécessaire au moins un cylindre d'amplification (3, 4, 5) est activé par étapes pour augmenter la plage de force disponible de l'actionneur (1), le maître-cylindre (2) et l'au moins un cylindre d'amplification (3, 4, 5) activé si nécessaire étant ensuite désactivés par étapes dans une phase de réduction de pression (23), et selon lequel, dans une phase de réduction de pression (23), le maître-cylindre (2) est d'abord désactivé, suivi par étapes par l'au moins un cylindre d'amplification (3, 4, 5) activé si nécessaire, les surpressions par rapport à la pression du système résultant des opérations de désactivation du maître-cylindre (2) et de l'au moins un cylindre d'amplification (3, 4, 5) étant stockées temporairement sous la forme d'énergie hydraulique dans un réservoir à haute pression et mises à disposition pour la prochaine phase d'élévation de pression pour la mise en pression hydraulique de l'au moins un cylindre d'amplification (3, 4, 5) et du maître-cylindre (2).

2. Procédé selon la revendication 1, **caractérisé en ce qu'**un seuil d'activation et de désactivation, de préférence en fonction de la pression, est prédéfini pour l'au moins un cylindre d'amplification (3, 4, 5).

3. Dispositif pour la mise en oeuvre d'un procédé selon une des revendications précédentes, comprenant un maître-cylindre (2) réglable à l'aide d'un élément de réglage (6) et au moins un cylindre d'amplification (3, 4, 5) commutable en cas de besoin pour augmenter la plage de force disponible d'un actionneur (1), **caractérisé en ce qu'**un réservoir à haute pression (11) est prévu pour la fourniture et le stockage par récupération d'énergie hydraulique pour l'au moins un cylindre d'amplification (3, 4, 5) et le maître-cylindre (2), qu'un clapet anti-retour (12, 13, 14) commun est relié à l'au moins un cylindre d'amplification (3, 4, 5) d'une part et au réservoir à haute pression (11) d'autre part pour le stockage par récupération d'énergie hydraulique dans le réservoir à haute pression (11) via une conduite à haute pression (15) et qu'un clapet anti-retour (17, 18, 19) commun est relié à l'au moins un cylindre d'amplification (3, 4, 5) d'une part et à un réservoir à basse pression (16) d'autre part pour la fourniture d'énergie hydraulique pour une opération de réaspiration via une conduite à basse pression (20)

4. Dispositif selon la revendication 3, **caractérisé en ce qu'**une soupape de régulation de pression (10) est placée en amont de l'au moins un cylindre d'amplification (3, 4, 5) pour l'instauration d'une rampe de pression.
